# EUROPEAN PATENT APPLICATION

(11) **EP 0 997 074 A1**
(43) Date of publication of application: **03.05.2000**
(21) Application number: 99308580.2
(22) Date of filing: 29.10.1999
(51) Int. Cl.: A23D 7/00, A23J 7/00

(54) **Edible Emulsion**

(30) Priority: 30.10.1998 GB 9823837
(60) Divisional application: 00200791.2
(71) Applicant: St. Ivel Limited, Swindon, Wiltshire SN4 7EF (GB)
(72) Inventor: Gupta, Bharat Bhushan, Bath, Avon BA1 4NG (GB)
(74) Representative: Daniels, Jeffrey Nicholas

(57) **Abstract**

An edible emulsion suitable for use as a dairy product substitute which is a water-in-oil emulsion having a fat phase and a water phase, wherein the emulsion:
(1) includes an emulsifier comprising an alcohol-insoluble fraction of vegetable lecithin obtainable using alcohols with 1 to 3 carbon atoms; and
(2) comprises 1 to 15% by weight of the alcohol-insoluble fraction of vegetable lecithin expressed on an oil-free basis.

## Description

The present invention relates to the use of water-in-oil (W/O) emulsions as dairy product substitutes, and dairy product substitutes containing such emulsions.

Many dairy products such as milk, concentrated milks and creams are oil-in-water (O/W) emulsions with a continuous water phase. Their shelf life is limited because bacteria can grow in the water phase and spoil the product. Heat treatment of the products sufficient to give a long shelf life, e.g. UHT treatment, gives products with a taste that does not appeal to the consumer. Substitutes for these products are also usually O/W emulsions, and suffer from the same shelf life problems. W/O emulsions in contrast have a continuous fat phase and bacterial growth is limited to the dispersed water phase, giving them a much longer shelf life without the need for heat treatments that adversely affect the taste.

Other dairy products, such as butter, are W/O emulsions. Here the shelf life may be adequate, but the physical properties of the product may not be ideal. For example, butter taken from the refrigerator is impossible to spread on bread, and has led to the production of butter substitutes such as low fat spreads which can be spread on bread when taken from the refrigerator.

EP-A-430180 describes a W/O emulsion useful as low-calorie margarine or butter cream, which uses a polyglycerol fatty acid ester based on erucic acid as emulsifier. GB-A-2080325 describes a W/O emulsion used as a cream substitute which comprises a water phase and/or a water phase containing globular fat coated with lipoprotein, dispersed in a continuous fat phase containing globular fat coated with lipoprotein. JP-A-6303924 describes a W/O emulsion cream for use in compound food, comprising a gelatinous food and a cream in contact with each other. JP-A-62143631 describes a whipped W/O emulsion cream containing sugar alcohol, used as a filling with bean jam in bun-type confectionery. JP-A-6178664 describes a W/O emulsion cream containing a specified triglyceride. JP-A-58013351 describes the use of W/O emulsion as a butter cream substitute, in which the emulsifier is monoglyceride, propylene glycol fatty acid ester, polyglycerol fatty acid ester, or sucrose fatty acid ester. Research Disclosure-338050 describes a W/O emulsion comprising sugar syrup, fat blend and hydrocolloid, used as a reduced-fat cake filling. WO-A-9517953 describes stable high internal phase ratio W/O and W/O/W emulsions for use in creamers, dressings, mayonnaise, shortenings, ice cream and clouding agents. Polyglycerol polyricinoleate is used as a W/O emulsifier at 0.5-3% based on fat content.

Lecithins are naturally-occurring phospholipids which may be extracted from various vegetable sources including oil seeds such as sunflower seeds, rapeseed and soyabeans, as well as from eggs. Lecithins are well known emulsifiers widely used as food additives, typically for promoting the formation of O/W emulsions. They are also widely used in margarines and low fat spreads, which are W/O emulsions, and certain phosphatidylcholine-enhanced lecithin fractions have been used for a pharmacological effect. For example, DE-U-29708250 discloses a bread spread with a blood cholesterol lowering effect in the examples of which lecithin is present at around 27%, 29% and 39%.

It is found that the known water-in-oil emulsions used as dairy product substitutes do not consistently have good organoleptic properties or good physical properties. In particular, emulsions made with polyglycerol polyricinoleate as emulsifier tend to have an unpleasant castor oil flavour. Accordingly, the present invention aims to overcome the disadvantages present in the prior art.

It is an aim of the present invention to overcome the above problems and to provide an improved edible water-in-oil emulsion for use as a diary product.

It is a further aim of the present invention to provide an improved food product comprising the emulsion.

It is yet a further aim of the present invention to provide a method for preparing the emulsion.

These aims are achieved by the present invention.

Accordingly, the present invention provides an edible emulsion suitable for use as a dairy product substitute which is a water-in-oil emulsion having a fat phase and a water phase, wherein the emulsion:
(1) includes an emulsifier comprising an alcohol-insoluble fraction of vegetable lecithin obtainable using alcohols with 1 to 3 carbon atoms; and
(2) comprises 1 to 15% by weight of the alcohol-insoluble fraction of vegetable lecithin expressed on an oil-free basis.

The present invention also provides a food product comprising the edible emulsion.

The present invention also provides a food product which is a cream substitute.

The present invention will be described now in more detail.

The present invention provides the use of an edible water-in-oil emulsion as a dairy product substitute, wherein the emulsion includes an emulsifier comprising an alcohol-insoluble fraction of vegetable lecithin. The alcohol-insoluble fraction of vegetable lecithin preferably has a low hydrophile-lipophile balance value. The use of such alcohol-insoluble fractions of vegetable lecithins at low levels in margarine to prevent spattering is known. US-A-2724649 describes the use of an alcohol-insoluble fraction of a vegetable lecithin at levels of above 0.05% in margarine, resulting in substantial freedom from spattering when the margarine is heated to frying temperature.

Preferably the amount of the alcohol-insoluble fraction of vegetable lecithin used is between 0.1% and 0.3%.

The present applicants have found that preparing dairy product substitutes as W/O emulsions using the emulsifier of the present invention gives products that have good organoleptic properties, good physical properties and a long shelf life. In particular these products can be used as cream substitutes of various fat contents, and as spreadable butter substitutes. Furthermore the physical properties of these products are such that the substitutes can have a lower fat content than the dairy product and yet have the same organoleptic and physical properties. In addition, emulsifier levels in the emulsion can be lowered when the alcohol-insoluble fractions of vegetable lecithin of the present invention are used.

The alcohol-insoluble fractions are obtainable by alcohol extraction of a lecithin sample derived from a vegetable source, using alcohols containing 1 to 3 carbon atoms. These alcohol-insoluble fractions of lecithin are characterized by a lowered proportion of phosphatidylcholine in the phospholipids and a raised proportion of the acidic phospholipids phosphatidyl-inositol and, to a lesser extent, phosphatidylethanolamine. They can either be liquid products containing certain amounts of neutral lipids, or they can be powders prepared by de-oiling the liquid products with for example acetone. Such alcohol-insoluble lecithin fractions are found to be more effective in forming W/O emulsions than prior art unfractionated lecithins, typically having hydrophile-lipophile balance values of 1 to 3. Preferably the alcohol-insoluble fractions of vegetable lecithin have a hydrophile-lipophile balance value of 1 to 2.

Typical ranges of concentration for the three major phospholipids in unfractionated soyabean lecithins and in the alcohol-insoluble fractions of soyabean lecithins of the present invention are given in Table 1. Suitable alcohol-insoluble fractions of vegetable lecithins include a deoiled fractionated soyabean lecithin powder known as VP609 (Lucas Meyer), a fractionated liquid soyabean lecithin known as VP627 (Lucas Meyer), and a fractionated liquid soyabean lecithin known as Nathin PI-3F (Stern Chemicals/Natterman Phospholipid).

**Table 1**

| | **Unfractionated soyabean lecithins (oil-free basis)** | **Alcohol-insoluble fractions of soyabean lecithins (oil-free basis)** |
|---|---|---|
| Phosphatidylcholine | 22-25% | 6-8.5% |
| Phosphatidylethanolamine | 20-23% | 22-24% |
| Phosphatidylinositol | 15-20% | 20-24% |

The alcohol-insoluble fractions of vegetable lecithin of the present invention are further characterized by the ratios of their constituent phospholipids, in that they have a phosphatidylcholine:phosphatidylethanolamine ratio of from 1:1.25 to 1:5 and a phosphatidylcholine:phosphatidylinositol ratio of from 1:1.25 to 1:6. Preferably they have a phosphatidylcholine: phosphatidylethanolamine ratio of from 1:1.75 to 1:5 and a phosphatidylcholine:phosphatidylinositol ratio of from 1:1.75 to 1:5, more preferably a phosphatidylcholine:phosphatidylethanolamine ratio of from 1:2.5 to 1:5 and a phosphatidylcholine: phosphatidylinositol ratio of from 1:2 to 1:5

The fat phase, containing the oil and the emulsifier, comprises 18 to 99% by weight of the W/O emulsion, preferably 30 to 80% by weight of the W/O emulsion, more preferably 35 to 60% by weight of the W/O emulsion. Alternatively, the emulsion may be a microemulsion, in which case the fat phase comprises 95 to 99.9% by weight of the W/O emulsion.

The fat phase can contain any of the edible oils or fats normally used in food products or a mixture of any such oils or fats. Suitable liquid oils include any of those normally used in food production, for example vegetable oils and hydrogenated vegetable oils, for example rapeseed oil, sunflower oil, safflower oil, corn oil, soyabean oil or mixtures thereof. Suitable solid fats for inclusion in blends include butteroil, anhydrous milk fat, fractionated anhydrous milkfat and hydrogenated vegetable oils. The particular oils and fats used in any application will depend on the physical and nutritional properties required in the end-product, and the skilled person will have no difficulty in choosing suitable oils and fats.

The alcohol-insoluble fraction of vegetable lecithin is typically used as the emulsifier at a concentration expressed on an oil-free basis of 1 to 15% by weight of the W/O emulsion, preferably at a concentration expressed on an oil-free basis of 4 to 10% by weight of the W/O emulsion. The phrase "expressed on an oil-free basis" means that the amount of emulsifier is expressed on the basis of the acetone-insoluble matter contained in the emulsifier.

Typically, the mean droplet size on a volume distribution basis (d[4,3]) of the W/O emulsion is in the range 0.5 to 10µm, preferably in the range 0.5 to 3 µm, when the water phase contains no added solutes having an osmotic effect or functional food ingredients and has a pH in the range 6 to 7. Alternatively, when the W/O emulsion is a microemulsion, the mean droplet size is in the range 1.5 to 150 nm.

The water phase may also contain added functional ingredients commonly used in food products, for example colours, flavourings, sweeteners, antioxidants, preservatives, acidulants, stabilizers, thickeners and gelling agents. The concentration at which such functional ingredients will be used will depend on the characteristics required in the end product, and will be known to the skilled person. The water phase may also contain solutes that have an osmotic effect such as salt (sodium chloride) or sugars.

To make the W/O emulsion of the present invention the following general procedure is used.
a. Prepare the water phase by dissolving any water-soluble ingredients in water.
b. Prepare the fat phase by blending any oil or fat ingredients together.
c. Dissolve the alcohol-insoluble fraction of vegetable lecithin in the fat phase.
d. Optionally heat the water phase and fat phase separately. The water phase and fat phase may typically be heated to a temperature of 20 to 95°C, preferably to 40 to 85°C, more preferably to 45 to 75°C
e Combine the water phase and fat phase to form a water-in-oil emulsion by use of a mixing and/or homogenizing process. If a homogenization process is used, it may be carried out at 20 to 100 MPa, using 1, 2 or 3 passes through the homogenizer.
f. Optionally pasteurize the emulsion. This may suitably be carried out by heating to a temperature of 65 to 95°C for 1 to 30 minutes.
g. Cool the emulsion to a temperature of -1 to 10°C, and store at this temperature if necessary.

### Example 1

W/O emulsions were prepared as follows:

| | | |
|---|---|---|
| Water phase | water | |
| Fat phase | 85.45% oil + 14.55% emulsifier | |
| Oil | (1) | rapeseed oil |
| | (2) | rapeseed oil + 2% solid fat content from hydrogenated rapeseed oil of MP 36°C |
| | (3) | rapeseed oil + 2% solid fat content from anhydrous milkfat of MP 28°C |
| | (4) | standard anhydrous milkfat |
| Emulsifier | | an alcohol-insoluble fraction of vegetable lecithin (VP609, obtained from Lucas Meyer) at 8% of the emulsion |
| W/O emulsion | 45% water + 55% fat phase (47% oil + 8% emulsifier) | |

Emulsions were prepared by mixing the water and fat phase at 65°C and using an Ultraturrax mixer for 2 minutes at maximum speed. The coarse emulsions were then homogenized once at 40 mPa using a Rannie homogenizer. They were then cooled and stored at 4°C overnight.

The W/O emulsions were analyzed for the following parameters:
mean droplet size (d[4,3] by laser scattering particle size distribution analysis, using a Malvern MasterSizer);
viscosity (using a Brookfield Viscometer Model DV-1 with the appropriate spindles);
fluidity and fat separation (%) by visual estimation.

The results of the analyses are shown in Table 2.

**Table 2**

| **Oil** | **d[4,3] ( m)** | **Viscosity (mPa.s)** | **Fluidity (similar to)** | **% Fat Separation @ 14 days** |
|---|---|---|---|---|
| 1 | 1.22 | 94 | Thin 18% cream | ∼10 |
| 2 | 1.32 | 2500 | 48% cream | 0 |
| 3 | 1.53 | 72 | Milk or 11% cream | 0 |
| 4 | 1.44 | NA* | Spreadable butter | 0 |

| | | | | |
|---|---|---|---|---|
| NA* : too viscous to be measured | | | | |

The results of the analyses show that it is possible to prepare W/O emulsions with 55% fat content with a wide range of viscosities and textures, approximating those of single (18% fat) and double (48% fat) creams and a spreadable butter. The emulsions with the textures of creams will have a much longer shelf life than dairy creams because they are W/O emulsions not O/W emulsions. O/W emulsions of the same fat composition as these W/O emulsions would show much lower viscosities. Furthermore, the emulsions made with an alcohol-insoluble fraction of vegetable lecithin had a much pleasanter taste than similar emulsions made with polyglycerol polyricinoleate, which had a castor oil flavour.

### Example 2

W/O emulsions were prepared as follows:

| | |
|---|---|
| Water phase | water |
| Fat phase | |
| Oil | standard anhydrous milkfat |
| Emulsifier | an alcohol-insoluble fraction of vegetable lecithin (VP609, obtained from Lucas Meyer) |
| W/O emulsion | prepared at different fat phase and emulsifier contents as in Table 3 |

Emulsions were prepared by mixing the water and fat phase at 65°C and using an Ultraturrax mixer for 2 minutes at maximum speed. The coarse emulsions were then homogenized once at 35-40 MPa using an APV Gaulin Lab 40 homogenizer. They were then cooled and stored at 4°C.

The W/O emulsions were analyzed for the following parameters:
viscosity, using a Brookfield Viscometer Model DV-1 with the appropriate spindles;
organoleptic properties.

The results of the analyses are shown in Table 3.

**Table 3**

| **Fat %** | **Emulsifier %** | **Water %** | **Viscosity (mPa.s)** | **Organoleptic Properties** |
|---|---|---|---|---|
| 48% | 4% | 48% | 384,400 | Spreadable, butter-like, grainy, -1% fat separation |
| 48% | 8% | 44% | 3,568,000 | Spreadable but very thick, grainy, waxy |

The results show that it is possible to prepare a spreadable butter-like W/O emulsion with a fat content of only 48%.

### Example 3

W/O emulsions were prepared as follows:

| | | |
|---|---|---|
| Water phase | 0.5M NaCl and 0.05M Phosphate buffer pH 6.8 | |
| Fat phase | (1) | rapeseed oil |
| Oil | (2) | rapeseed oil + 5% solid fat content from anhydrous milkfat of MP 28°C |
| Emulsifier | | an alcohol-insoluble fraction of vegetable lecithin (VP609, ex-Lucas Meyer) at 8% of the emulsion |
| W/O emulsion | 45% water phase and 55% fat phase (47% fat and 8% emulsifier) | |

Emulsions were prepared by taking the water phase and fat phase at 70°C and passing twice through a laboratory scale high pressure jet homogeniser as described by Burgaud, I., Dickinson, E. & Nelson, P.V. (*International Journal of Food Science and Technology* 1990 **25** 39-46) at 40MPa.

The emulsions were analysed for mean particle size (d[4,3]) using a Malvern MasterSizer and their visual appearance noted. The results of the analysis are shown in Table 4.

**Table 4**

| **Sample Number** | **D[4,3] ( m)** | **Visual Appearance** |
|---|---|---|
| 1 | 1.72 | like thin 18% fat cream |
| 2 | 1.25 | Like thick double cream - very thick |

The results show that it is possible to prepare very fine W/O emulsions with varying viscosities and rheological properties by varying the type and amount of solid fat in the fat phase.

### Example 4

W/O emulsions were prepared as follows:

| | |
|---|---|
| Water phase | water |
| Fat phase | as shown in Table 5 |

The emulsifiers used were as follows:
Nathin PI-3F: a liquid alcohol-insoluble fraction of soyabean lecithin with a typical PC:PE ratio of 1:2.8 and a typical PC:PI ratio of 1:2.4, obtained from Stern Chemicals;
VP609: a powdered alcohol-insoluble fraction of soyabean lecithin with a typical PC:PE ratio of 1:3.29 and a typical PC:PI ratio of 1:3.43, obtained from Lucas Meyer;
VP627: a liquid alcohol-insoluble fraction of soyabean lecithin with a typical PC:PE ratio of 1:3.29 and a typical PC:PI ratio of 1:3.43, obtained from Lucas Meyer; and
PGPR: polyglycerol polyricinoleate, obtained from Danisco Ingredients

Emulsions were prepared by mixing the water and fat phases at 53°C using an Ultraturrax mixer for 2 minutes at maximum speed to form coarse emulsions. The coarse emulsions were then homogenized in an APV Gaulin Lab 40 homogenizer at 40MPa, rapeseed oil having first been passed through the homogenizer before each emulsion.

The viscosity of the emulsions was measured, using a Brookfield Viscometer Model DV-1, and the visual appearance and taste were noted. The results of the analysis are shown in Table 5.

The results illustrate the variety of textures and viscosities that can be obtained using alcohol-insoluble fractions of vegetable lecithin as the emulsifier in W/O emulsions, and the improvements in taste and texture when compared with W/O emulsions containing PGPR. It is possible to obtain any desired texture from pourable liquids to spreadable solids by varying the type of fat, the water phase/fat phase ratio, and the alcohol-insoluble fraction of vegetable lecithin used as emulsifier.

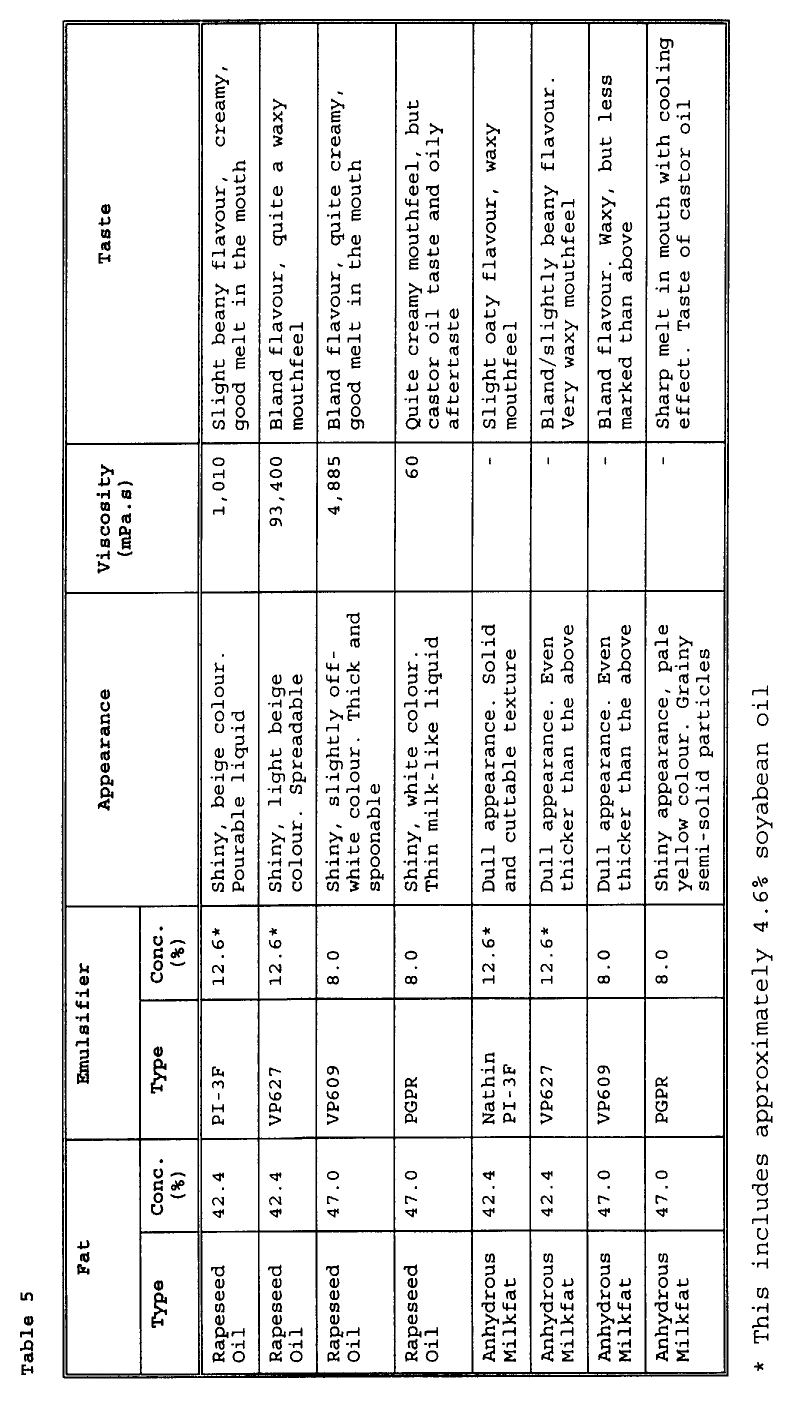

### Example 5

W/O emulsions of the following composition were prepared by the method of Example 4:

| | | |
|---|---|---|
| Water phase | water | |
| Fat phase | | |
| Oil | | rapeseed oil |
| Emulsifier | | 12.6% of VP627, obtained from Lucas Meyer |
| W/O emulsions | (1) | 55% fat phase and 45% water phase |
| | (2) | 40% fat phase and 60% water phase |

Oil-in-water (O/W) emulsions of the following composition were also prepared by a similar method to that of Example 4, the difference being that the homogenizer was not flushed through with rapeseed oil before homogenizing the emulsions:

| | |
|---|---|
| Water phase | water |
| | 0.125% of sodium caseinate as emulsifier |
| Fat phase | rapeseed oil |
| O/W emulsions | as (1) and (2) above |

The emulsions were subjected to shelf life testing and the results are shown in Table 6.

**Table 6**

| **Emulsion Type** | W/O | W/O | O/W | O/W |
|---|---|---|---|---|
| **Fat Phase %** | 55% | 40% | 55% | 40% |
| APC @ 3 days | 1.48 | ND | 2.65 | 2.59 |
| APC @ 9 days | 1.54 | 1.78 | 2.35 | 2.83 |
| APC @ 15 days | 2.42 | 2.32 | 4.06 | 6.17 |
| APC @ 21 days | 3.11 | 3.53 | NA | NA |
| APC: Aerobic Plate Count | | | | |
| ND: Not detectable (= <0.70) | | | | |
| NA: Not available | | | | |

These results show that the W/O emulsions had, as expected, longer shelf lives than the O/W emulsions of similar composition.

## Claims

1. An edible emulsion suitable for use as a dairy product substitute which is a water-in-oil emulsion having a fat phase and a water phase, wherein the emulsion:
(1) includes an emulsifier comprising an alcohol-insoluble fraction of vegetable lecithin obtainable using alcohols with 1 to 3 carbon atoms; and
(2) comprises 1 to 15% by weight of the alcohol-insoluble fraction of vegetable lecithin expressed on an oil-free basis.

2. An edible emulsion according to claim 1, wherein the alcohol-insoluble fraction of vegetable lecithin is used at a concentration expressed on an oil-free basis of 2 to 10% by weight of the water-in-oil emulsion.

3. An edible emulsion according to claim 1 or claim 2, wherein the alcohol-insoluble fraction of vegetable lecithin is characterized by a phosphatidylcholine:phosphatidylethanolamine ratio of from 1:1.25 to 1:5 and a phosphatidylcholine:phosphatidyl-inositol ratio of from 1:1.25 to 1:6.

4. An edible emulsion according to claim 3, wherein the alcohol-insoluble fraction of vegetable lecithin is characterized by a phosphatidylcholine:phosphatidylethanolamine ratio of from 1:2.5 to 1:5 and a phosphatidylcholine: phosphatidylinositol ratio of from 1:2 to 1:5.

5. An edible emulsion according to any one of the preceding claims, wherein the alcohol-insoluble fraction of vegetable lecithin has a hydrophile-lipophile balance value of 1 to 3.

6. An emulsion according to any one of the preceding claims, wherein the mean droplet size on a volume distribution basis (d[4,3]) is in the range 0.5 to 10 µm when the water phase contains no solutes having an osmotic effect or functional food ingredients and has a pH in the range 6 to 7.

7. An emulsion according to claim 6, wherein the mean droplet size on a volume distribution basis (d[4,3]) is in the range 0.5 to 3 µm.

8. An emulsion according to any one of claims 1 to 5, wherein the mean droplet size on a volume distribution basis (d[4,3]) is in the range 1.5 to 150 nm.

9. An edible emulsion according to any one of claims 1 to 7, wherein the fat phase comprises 18 to 99% by weight of the water-in-oil emulsion.

10. An emulsion according to claim 9, wherein the fat phase comprises 35 to 60% by weight of the water-in-oil emulsion.

11. An emulsion according to claim 8, wherein the fat phase comprises 95 to 99.9% by weight of the water-in-oil emulsion.

12. A food product comprising an emulsion as defined in any one of the preceding claims.

13. A food product according to claim 12, which is a spreadable butter substitute.

14. A food product according to claim 12, which is a cream substitute.

15. A method of preparing an edible water-in-oil emulsion suitable for use as a dairy product substitute comprising emulsifying a water phase with a fat phase comprising an emulsion which:
(1) includes an emulsifier comprising an alcohol-insoluble fraction of vegetable lecithin obtainable using alcohols with 1 to 3 carbon atoms; and
(2) comprises 1 to 15% by weight of the alcohol-insoluble fraction of vegetable lecithin expressed on an oil-free basis.

16. A method according to claim 15 comprising the steps of:
(i) providing ingredients for each of the water phase and fat phase;
(ii) preparing the water phase and fat phase;
(iii)providing an alcohol-insoluble fraction of vegetable lecithin and introducing it into the fat phase;
(iv) optionally heating separately the water phase and fat phase;
(v) combining the water phase and fat phase to form a water-in-oil emulsion by means of a mixing and/or a homogenization process;
(vi) optionally pasteurizing the water-in-oil emulsion;
(vii)cooling the water-in-oil emulsion.
